(19) Europäisches Patentamt
European Patent Office
Office européen des brevets

(11) **EP 4 391 349 B1**

(12) **FASCICULE DE BREVET EUROPEEN**

(45) Date de publication et mention
de la délivrance du brevet:
**01.10.2025   Bulletin 2025/40**

(21) Numéro de dépôt: **22216620.9**

(22) Date de dépôt: **23.12.2022**

(51) Classification Internationale des Brevets (IPC):
**H02N 2/10** *(2006.01)*      **G04C 3/12** *(2006.01)*

(52) Classification Coopérative des Brevets (CPC):
**H02N 2/105; G04C 3/12**

(54) **MOTEUR PIÉZOÉLECTRIQUE ROTATIF RÉSISTANT AUX CHOCS, NOTAMMENT POUR L'HORLOGERIE**

STOSSFESTER PIEZOELEKTRISCHER ROTATIONSMOTOR, INSBESONDERE FÜR UHRWERKE

SHOCK-RESISTANT PIEZOELECTRIC ROTARY MOTOR, IN PARTICULAR FOR TIMEPIECES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(43) Date de publication de la demande:
**26.06.2024   Bulletin 2024/26**

(73) Titulaire: **The Swatch Group Research and Development Ltd**
**2074 Marin (CH)**

(72) Inventeurs:
• **KAHROBAIYAN, Mohammad Hussein**
**2043 Boudevilliers (CH)**
• **FERRI, Yvan**
**2024 St-Aubin-Sauges (CH)**
• **DIDIER, Alexandre**
**3235 Erlach (CH)**
• **PARATTE, Lionel**
**2074 Marin-Epagnier (CH)**
• **BORN, Jean-Jacques**
**1110 Morges (CH)**

(74) Mandataire: **ICB SA**
**Faubourg de l'Hôpital, 3**
**2001 Neuchâtel (CH)**

(56) Documents cités:
JP-A- H03 273 871     US-A- 4 888 515
US-A- 5 079 471     US-B1- 6 664 710

**Description**

Domaine technique de l'invention

L'invention se rapporte au domaine technique des moteurs piézoélectriques rotatifs. L'invention se rapporte également au domaine technique des pièces d'horlogerie munies d'un tel moteur piézoélectrique rotatif.

Arrière-plan technologique

Les moteurs électriques usuellement utilisés en horlogerie sont des moteurs rotatifs de type « Lavet », qui fonctionnent sur des principes physiques électromagnétiques. Un tel moteur comporte généralement un stator muni de bobines et un rotor aimanté, qui tourne par actionnement déphasé des bobines.

Cependant, ces moteurs ont une résistance limitée aux champs magnétiques élevés. A partir d'une certaine valeur de champs magnétique, le moteur se bloque. En général, ils se bloquent sous l'effet d'un champ magnétique qui dépasse 2 mT.

Ainsi, pour éviter ce problème, il est nécessaire de concevoir des moteurs fonctionnant sur d'autres principes physique.

Il existe par exemple des moteurs électrostatiques à peignes, tel que celui décrit dans le brevet CH709512. Mais les peignes prennent de la place, et ils consomment une énergie plus élevée que les moteurs de type « Lavet ».

Des moteurs basés sur l'effet piézoélectrique ont aussi été mis au point, par exemple dans le brevet EP0587031. Mais celui-ci est limité à l'actionnement d'un quantième. Cependant, sa consommation élevée et le risque d'usure prématurée ne permettent pas l'entraînement d'une aiguille des secondes, qui demande en général le plus d'énergie.

Pour limiter la consommation, un moteur piézoélectrique à mouvement orbital est décrit dans la demande de brevet EP 4 198 648 A1 déposée au nom The Swatch Group Research and Development Ltd. Dans ce moteur, le rotor est entraîné par un élément mobile en forme d'anneau décrivant un mouvement orbital, de manière à venir en contact avec le rotor, qui est agencé à l'intérieur de l'anneau. Pour déplacer l'élément mobile, un actionneur piézoélectrique comprend plusieurs résonateurs piézoélectriques formés de bras flexibles oscillant, les bras tenant et déplaçant l'élément mobile, les bras comportant un matériau piézoélectrique actionnable.

Cependant, en dépit de la grande compacité de cette solution, un choc latéral provoque directement une force sur l'anneau, perturbant ainsi le mouvement orbital et pouvant causer une perte chronométrique du mouvement d'horlogerie équipée d'un tel moteur piézoélectrique.

Des moteurs rotatifs similaires utilisant deux actionneurs piézoélectriques orthogonaux déplaçant un anneau d'entraînement du rotor sont connus de US 6 664 710 B1, JP H03-273871 A, US 5 079 471 et US 4 888 515, par exemple.

Résumé de l'invention

Le but de la présente invention est de proposer un moteur piézoélectrique rotatif, qui peut résister à des champs électromagnétiques élevés, qui supporte les chocs latéraux, tout en gardant une consommation d'énergie et un volume réduit.

A cet effet, l'invention se rapporte à un moteur piézoélectrique rotatif, notamment pour une pièce d'horlogerie, le moteur comprenant :

- un rotor configuré pour pouvoir tourner et actionner un dispositif mécanique,
- un stator configuré pour faire tourner le rotor, le stator comprenant un actionneur piézoélectrique,

l'actionneur piézoélectrique comprenant un élément mobile dont le déplacement fait tourner le rotor dans un premier sens.

L'invention est remarquable en ce que l'actionneur piézoélectrique comprend deux résonateurs piézoélectriques actionnables électriquement, les deux résonateurs étant reliés à l'élément mobile pour le déplacer contre le rotor afin de le faire tourner, les deux résonateurs étant agencés par rapport à l'élément mobile de manière à faire osciller l'élément mobile dans une première et une deuxième direction différentes l'une de l'autre, chaque résonateur comportant un centre de rotation, les deux résonateurs étant disposés par rapport à l'élément mobile, de sorte qu'autour de chaque centre de rotation, le couple résultant de toutes les forces d'accélération s'appliquant dans le plan de chaque résonateur soit nul.

Un stator ayant une telle configuration permet de transmettre facilement un mouvement de rotation au rotor grâce à un actionneur piézoélectrique. En effet, l'élément mobile peut être déplacé afin d'être en contact avec le rotor pour transmettre un mouvement dans un premier sens. Ainsi, lorsque les résonateurs oscillent, l'élément mobile effectue un mouvement rotatif orbital pour venir en contact avec le rotor et lui transmet une force pour le faire tourner dans un premier sens.

Comme le couple résultant de toutes les forces exercées sur chaque centre de rotation est nul dans le plan de chaque résonateur, l'effet des chocs latéraux est fortement diminué, voire annulé. Ainsi, on évite le risque de perturber le mouvement orbital et donc des pertes chronométriques dans le cas d'un moteur d'horlogerie.

En outre, en disposant de deux résonateurs piézoélectriques pour produire des oscillations dans des directions sensiblement différentes, on peut déplacer l'élément mobile dans un mouvement orbital, sans avoir besoin de multiplier le nombre de résonateurs.

Selon une forme de réalisation particulière de l'invention, le premier et le deuxième résonateur sont agencés perpendiculairement l'un par rapport à l'autre, de sorte que la première et la deuxième direction soient sensiblement perpendiculaires. On peut ainsi obtenir un mouvement orbital circulaire.

Selon une forme de réalisation particulière de l'invention, le premier et le deuxième résonateur sont chacun agencés sur un côté différent de l'élément mobile, les deux côtés étant de préférence adjacents.

Selon une forme de réalisation particulière de l'invention, le moteur piézoélectrique comprend une première table de translation permettant à l'élément mobile de se mouvoir selon la première direction.

Selon une forme de réalisation particulière de l'invention, le moteur piézoélectrique comprend une deuxième table de translation permettant à l'élément mobile de se mouvoir selon la deuxième direction.

Selon une forme de réalisation particulière de l'invention, la deuxième table de translation est agencée en série de la première table de translation, l'élément mobile étant relié à la deuxième table de translation.

Selon une forme de réalisation particulière de l'invention, la première table de translation et la deuxième table de translation sont sensiblement perpendiculaires l'une par rapport à l'autre.

Selon une forme de réalisation particulière de l'invention, une table de translation est agencée de l'autre côté de l'élément mobile par rapport à un résonateur.

Selon une forme de réalisation particulière de l'invention, chaque résonateur est muni d'une masse oscillante actionnée par une paire de lames flexibles comportant un matériau piézoélectrique.

Selon une forme de réalisation particulière de l'invention, l'élément mobile effectue un mouvement orbital dans un deuxième sens inverse du premier sens.

Selon une forme de réalisation particulière de l'invention, l'élément mobile est toujours en contact avec le rotor pendant le fonctionnement du moteur rotatif.

Selon une forme de réalisation particulière de l'invention, le déplacement de l'élément mobile fait tourner le rotor de manière continue.

Selon une forme de réalisation particulière de l'invention, l'élément mobile a une forme d'anneau, le rotor étant agencé à l'intérieur de l'anneau.

Selon une forme de réalisation particulière de l'invention, le contact entre l'élément mobile et le rotor mobile est à l'intérieur de l'anneau.

Selon une forme de réalisation particulière de l'invention, le rotor comprend une roue dentée, l'anneau comportant une denture interne coopérant avec une denture externe de la roue dentée.

Selon une forme de réalisation particulière de l'invention, l'élément mobile est immobile en rotation sur lui-même.

Selon une forme de réalisation particulière de l'invention, l'élément mobile est agencé autour du rotor.

Selon une forme de réalisation particulière de l'invention, le premier et le deuxième résonateur sont actionnés avec un déphasage de 90°.

Selon une forme de réalisation particulière de l'invention, le premier et le deuxième résonateur sont chacun agencés sur un côté différent de l'élément mobile, les deux côtés étant de préférence adjacents.

L'invention se rapporte également à une pièce d'horlogerie comportant un mouvement d'horlogerie comprenant une transmission d'engrenages configurée pour faire tourner au moins une aiguille, et comprenant un tel moteur piézoélectrique agencé pour actionner la transmission d'engrenages.

Brève description des figures

D'autres particularités et avantages ressortiront clairement de la description qui en est faite ci-après, à titre indicatif et nullement limitatif, en référence aux dessins annexés, dans lesquels :

- la figure 1 représente schématiquement une vue de dessus d'un mode de réalisation du moteur piézoélectrique rotatif selon l'invention à l'arrêt, le rotor et le stator n'étant pas en contact,

- la figure 2 représente schématiquement une vue de dessus du mode de réalisation du moteur piézoélectrique rotatif selon l'invention en fonctionnement, le rotor et le stator étant en contact à six heures,

- la figure 3 représente schématiquement une vue de dessus du mode de réalisation du moteur piézoélectrique rotatif selon l'invention en fonctionnement, le rotor et le stator étant en contact à neuf heures,

- la figure 4 représente schématiquement une vue de dessus du mode de réalisation du moteur piézoélectrique rotatif selon l'invention en fonctionnement, le rotor et le stator étant en contact à midi,

- la figure 5 représente schématiquement une vue de dessus du mode de réalisation du moteur piézoélectrique rotatif selon l'invention en fonctionnement, le rotor et le stator étant en contact à trois heures, et

- la figure 6 représente schématiquement une vue de dessus d'un résonateur du moteur piézoélectrique.

Description détaillée de l'invention

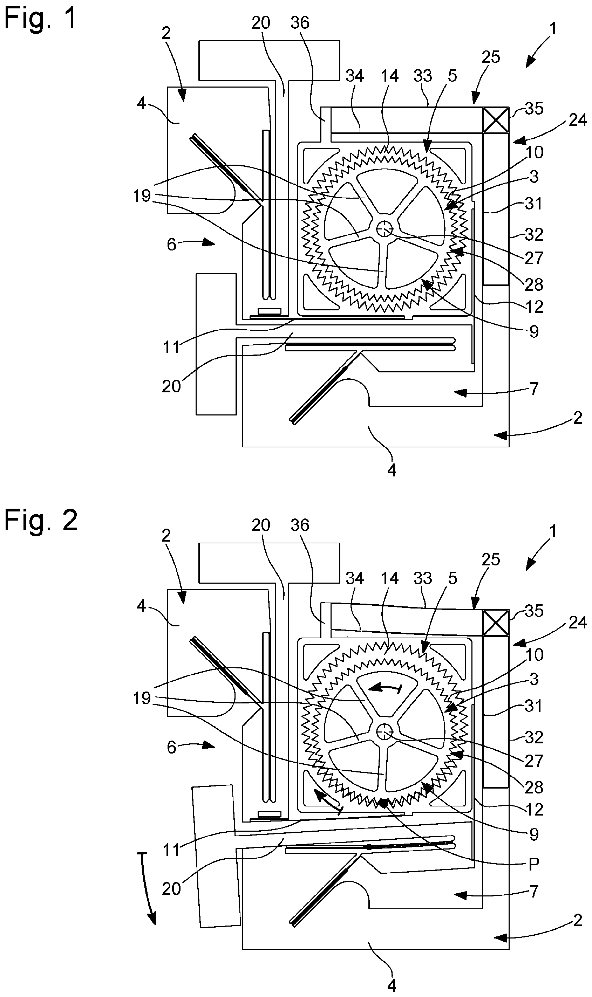

Les figures 1 à 5 montrent un mode de réalisation d'un moteur piézoélectrique 1 rotatif. Le moteur piézoélectrique 1 peut notamment servir dans une pièce d'horlogerie pour actionner un dispositif d'affichage, comme des aiguilles agencées sur un cadran. Le moteur piézoélectrique 1 s'étend de préférence sensiblement dans un plan.

Le moteur piézoélectrique 1 comprend un rotor 3 mobile en rotation sur lui-même, et configuré pour pouvoir tourner et actionner une transmission d'engrenages mécaniques, notamment pour un dispositif d'affichage. Le moteur piézoélectrique 1 comprend un stator 2 configuré pour actionner et faire tourner le rotor 3.

Le rotor 3 est par exemple une roue dentée 9 agencée au centre du moteur piézoélectrique 1. La roue dentée 9 est par exemple montée sur un axe muni d'un pivot à chaque extrémité, ces pivots étant montés dans des paliers permettant à l'axe de tourner. La roue dentée 9 comporte un anneau externe 28 et un moyeu 27 au centre, le moyeu 27 étant relié à l'anneau 28 par des rayons rigides 19. L'axe 13 comporte un pignon 21 parallèle à la roue dentée 9, et agencé pour transmettre le mouvement reçu par la roue dentée 9 à une transmission d'engrenages, par exemple à un mouvement d'une pièce d'horlogerie. Le rotor 3 est muni d'une denture périphérique 10 sur l'anneau 28, qui permet d'actionner la roue dentée 9.

De préférence, le rotor 3 et/ou le stator 2 comprend un matériau micro-usinable, tel que du silicium, de préférence en totalité. Alternativement, le rotor 3 peut-être en métal de façon à limiter l'usure et les frottements, lorsque le stator 2 est en silicium, et réciproquement.

Encore alternativement, par micro-usinage, le rotor 3 et/ou le stator 2 comprend, de préférence en totalité, un matériau, tel que du quartz, du Nickel (obtenu par électrodéposition de métal ou par un procédé de type LIGA), ou du diamant (obtenu par un dépôt de type ALD), ou du verre (obtenu par Selective Laser Etching ou SLE).

Le stator 2 comprend un élément fixe 4 immobile et un élément mobile 5 configuré pour actionner la roue dentée 9 du rotor 3. L'élément mobile 5 est agencé à distance de l'élément fixe 4. L'élément mobile 5 a ici une forme d'anneau de forme extérieure en cadre carré, et de forme intérieure circulaire.

L'élément mobile 5 est disposé autour du rotor 3, le rotor 3 étant agencé à l'intérieur de l'anneau. L'élément mobile 5 est muni d'une denture interne 12 sur la forme circulaire de l'anneau, la denture interne 12 coopérant avec la denture périphérique 10 du rotor 3 pour la faire tourner. L'anneau est plus large que le rotor 3 pour pouvoir insérer le rotor 3, et pour permettre le déplacement de l'élément mobile 5.

Grâce au déplacement de l'élément mobile 5, et de son contact avec le rotor 3, le rotor 3 tourne dans un premier sens.

A cette fin, le stator 2 est doté d'un actionneur piézoélectrique.

L'actionneur piézoélectrique comprend deux résonateurs 6, 7 actionnables électriquement. Un premier résonateur 6 et un deuxième résonateur 7 sont reliés à l'élément mobile 5 pour pouvoir le déplacer contre le rotor 3 afin de faire tourner ce dernier.

Les résonateurs 6, 7 sont configurés pour générer un mouvement oscillatoire, de manière à guider l'élément mobile 5 dans un mouvement orbital. Le premier résonateur 6 permet à l'élément mobile 5 de se déplacer dans une première direction X horizontale, et le deuxième résonateur 6 permet à l'élément mobile 5 de se déplacer dans une deuxième direction Y verticale.

Le premier résonateur 6 et le deuxième résonateur 7 comportent chacun une masse oscillante 20. Chaque masse oscillante 20 a une forme longitudinale s'étendant le long d'un côté 9 de l'élément mobile 5. Chaque masse oscillante 20 comprend au moins une masselotte à une extrémité.

Lorsqu'un résonateur 6, 7 est actionné, la masse oscillante 20 pivote autour d'un centre de rotation en oscillant.

Les caractéristiques et le fonctionnement des résonateurs 6, 7 sont décrits en détail plus loin dans la description. Les oscillations s'effectuent transversalement au côté du cadre.

Chaque masse oscillante 20 est reliée à l'élément mobile 5 par une lame flexible secondaire 11, 12 sensiblement droite. Les lames flexibles secondaires 11, 12 sont rattachées à une masselotte 21 agencée à l'extrémité de la masse oscillante 20, depuis un plot 22 s'étendant de deux côtés adjacents de l'élément mobile 5. Les lames flexibles secondaires 11, 12 sont sensiblement perpendiculaires aux bras de masse oscillante 20.

Les lames flexibles secondaires 11, 12 sont disposées orthogonalement l'une par rapport à l'autre, le long des deux côtés adjacents de l'élément mobile 5.

Lorsque les masses oscillantes 20 oscillent en déphasage, chaque lame flexible secondaire 11, 12 tire puis pousse alternativement l'élément mobile 5.

Ainsi, on crée un mouvement orbital de l'élément mobile 5. On entend par mouvement orbital, un mouvement circulaire de l'élément mobile 5 autour d'un axe de rotation décentré. De plus, l'élément mobile 5 ne fait pas de mouvement rotatif sur lui-même, car ce degré de liberté est bloqué par des tables de translation flexibles tek que décrit plus loin.

Dans cette invention, on n'utilise que deux résonateurs 6, 7 pour créer ce mouvement orbital. **Il** n'est pas nécessaire de prévoir un résonateur supplémentaire pour obtenir ce déplacement.

Pour actionner l'élément mobile 5, le premier et le deuxième résonateur 6, 7 oscillent dans des directions sensiblement orthogonales.

Les deux résonateurs sont de préférence agencés perpendiculairement l'un par rapport à l'autre, et sont disposés sur deux côtés adjacents de l'élément mobile 5. Ainsi, on obtient un mouvement orbital sensiblement circulaire.

Pour accompagner et guider le mouvement de l'élément mobile 5 sur un troisième côté, l'élément mobile 5 est en outre relié au stator 4 par deux tables de translation flexibles 24, 25. Une première table de translation 24 et une deuxième table de translation 25 sont agencées en série, l'élément mobile 5 étant rattaché à la deuxième table de translation 25.

Chaque table de translation 24, 25 est munie de deux lames flexibles tertiaires 31, 32, 33, 34 sensiblement parallèles, et d'une partie rigide 35, 36 mobile sur lesquelles sont raccordées les lames flexibles tertiaires 31, 32, 33, 34.

Les lames flexibles tertiaires 31, 32 de la première table de translation 24 sont raccordées au stator 2 à une extrémité et à une première partie rigide 30 à l'autre extrémité.

Les lames flexibles tertiaires 33, 34 de la deuxième table de translation 25 sont raccordées à la première partie rigide 35 à une extrémité, et à une deuxième partie rigide 36 à l'autre extrémité. La deuxième partie rigide 36 est reliée au cadre de l'élément mobile 5.

La première table de translation 24 permet à l'élément mobile 5 de se mouvoir selon un premier degré de liberté, horizontalement selon l'axe X, et la deuxième table de translation 25 permet à l'élément mobile 5 de se mouvoir selon un deuxième degré de liberté, verticalement selon l'axe Y. De préférence, le deuxième degré de liberté est sensiblement orthogonal au premier degré de liberté.

A cette fin, la première table de translation 24 et la deuxième table de translation 25 sont sensiblement orthogonales l'une par rapport à l'autre. Les deux lames flexibles tertiaires 31, 32, 33, 34 empêchent l'élément mobile 5 de pivoter sur lui-même, mais autorisent un déplacement latéral. Cette caractéristique permet à l'élément mobile 5 de transmettre un couple au rotor 3 comme décrit plus loin.

Chaque table de translation 24, 25 est agencée de l'autre côté de l'élément mobile 5 par rapport à l'un des résonateurs 6, 7. Autrement dit, un couple formé d'un résonateur 6, 7 et d'une table de translation 24, 25 est disposé de part et d'autre de l'élément mobile 5 selon une même direction, assurant ainsi une grande compacité du moteur 1.

Les résonateurs 6, 7 sont configurés pour déplacer l'élément mobile 5 contre le rotor 3 pour le faire tourner. A cette fin, les résonateurs 6, 7 sont actionnés d'une manière déphasée entre eux.

Le déphasage entre les résonateurs 6, 7 engendre le mouvement orbital, de préférence circulaire, de l'élément mobile 5. L'élément mobile 5 effectue un mouvement circulaire, tout en restant immobile en rotation sur lui-même, grâce aux deux tables de translation 24,25.

Le mouvement de l'élément mobile 5 est de préférence continu, et fait tourner le rotor 3 de manière continue. A cette fin, l'élément mobile 5 est toujours en contact avec le rotor 3 pendant le fonctionnement du moteur. Le point de contact P entre l'élément mobile 5 et le rotor 3 est mobile à l'intérieur de l'anneau.

Les figures 2 à 5 montrent différents instants successifs au cours desquels, le point de contact P entre le rotor 3 et l'élément mobile 5 se déplace à l'intérieur de l'anneau, ici en sens horaire. Le mouvement orbital de l'anneau, dont l'espace intérieur est plus large que le rotor 3, engendre un point de contact P mobile entre l'anneau et le rotor 3. Une portion différente de la denture interne 12 de l'anneau engrène la denture périphérique 10 de la roue dentée 9 à chaque instant. Ainsi, le rotor 3 est entraîné en rotation sur l'lui-même dans le sens opposé à **P,** soit en sens antihoraire.

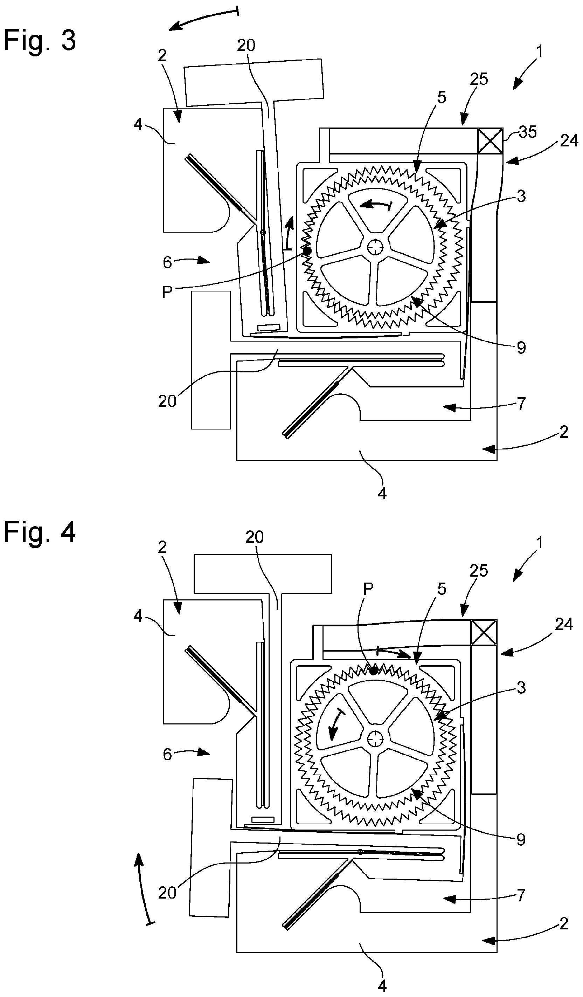

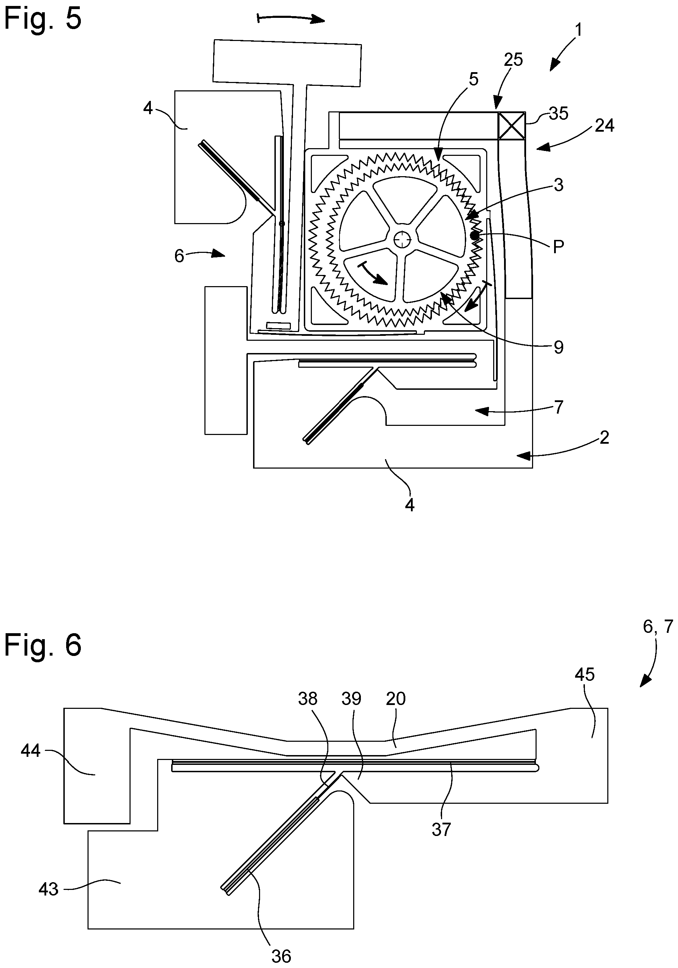

Sur la figure 2, l'élément mobile 5 est remonté, de sorte que le point de contact P est en bas de la roue dentée 9, soit à six heures. Sur la figure 3, l'élément mobile 5 s'est décalé à droite, de sorte que le point de contact P est à gauche de la roue dentée 9, soit à neuf heures. Puis l'élément mobile 5 est descendu, de sorte que le point de contact P est en haut de la roue dentée 9, soit à midi, comme le montre la figure 4. Enfin, sur la figure 5, l'élément mobile 5 s'est décalé à gauche, de sorte que le point de contact P est à droite de la roue dentée 9, soit à trois heures. D'une figure à la suivante, l'élément mobile 5 a effectué un mouvement orbital d'un quart de tour. Les lames flexibles secondaires 11, 12 de liaison, les lames flexibles tertiaires 31, 32, 33, 34 des deux tables de translation 24, 25, et les lames flexibles des résonateurs 6,7 se courbent en fonction de la direction selon laquelle l'élément mobile 5 se déplace. Les masses oscillantes 20 suivent également le mouvement : elles oscillent de façon sinusoïdale avec un déphasage de 90° entre chacun des résonateurs 6, 7.

Le rotor 3 et l'élément mobile 5 forment ce que l'on appelle couramment en mécanique un réducteur harmonique. La denture 10 du rotor 3 comprend par exemple 56 dents, tandis que la denture 12 de l'élément mobile 5 comprend 60 dents. Ainsi, le facteur de réduction r entre la vitesse du point de contact et la vitesse du rotor est donnée par $r = \dfrac{Zm - Zr}{Zr}$ où Zm désigne le nombre de dents de l'élément mobile 5, et Zr désigne le nombre de dents du rotor 3. Ainsi, dans notre exemple, $r = \dfrac{60 - 56}{56} = \dfrac{1}{14}$. Cette réduction est avantageuse car elle est directement intégrée au moteur, réduisant ainsi le nombre de rouages de réduction supplémentaires nécessaires pour entraîner une aiguille par exemple.

De préférence, au moins une dent de la denture 10 du rotor 3 sont en contact avec la denture 12 de l'élément mobile 5 pour transmettre le mouvement. Ainsi, on évite le risque de blocage du rotor 3. On peut dimensionner l'élément mobile 5 et le rotor 3 pour que seulement une dent de la denture 10 soient en contact avec la denture 12 du rotor 3.

De préférence, les amplitudes des tensions alternatives appliquées aux résonateurs 6, 7, propres à faire osciller l'élément mobile 5, sont variables de façon à rendre parfaitement circulaire l'oscillation de l'élément mobile 5, dans le but de compenser une éventuelle ovalisation non souhaitée de la trajectoire, et ainsi également d'augmenter le rendement du moteur 1.

Les signaux électriques appliqués à chacun des deux résonateurs 6,7 sont de préférence sinusoïdaux et déphasés de 90° : lorsque l'une des amplitudes est à son maximum, l'autre est nulle, et vice-versa.

Si l'on veut faire tourner le rotor 3 dans l'autre sens, il suffit d'inverser le signe du déphasage des tensions électriques appliquées aux résonateurs 6, 7. Ainsi, les oscillations des masses oscillantes 20 provoquent la rotation de l'élément mobile 5 du stator 2 dans l'autre sens. Dans le cas de l'actionnement d'un affichage à aiguilles, cela permet de régler la position des aiguilles dans les deux sens.

Dans le cas d'une montre, la fréquence de résonance ou fréquence propre de chacun des résonateurs 6, 7 du moteur piézoélectrique 1 est adaptée à la fréquence du quartz, lequel sert à régler la marche du mouvement. En fonctionnant à la fréquence de résonance, on obtient une amplitude raisonnable pour une consommation donnée.

On choisit une fréquence d'excitation correspondant non seulement à la fréquence de résonance, mais aussi à un sous-multiple de la fréquence du quartz, qui est généralement de 32764 Hz. Par exemple, on choisit une fréquence de 128Hz ou 256Hz. La fréquence du moteur 1 est de préférence ajustée et accordée à la fréquence d'excitation de sorte que son amplitude d'oscillation ne descende pas en-dessous de 90-95% de l'amplitude maximale à la résonance.

On adapte la fréquence en modifiant la masse de l'élément mobile 5 et/ou la rigidité des lames flexibles. On peut par exemple assembler un anneau sous l'élément mobile 5 pour l'alourdir afin de baisser sa fréquence d'oscillation. L'anneau, qui n'est pas représenté sur les figures, comprend par exemple du maillechort, de préférence en totalité.

On peut aussi ajouter des micro-points de colle pour faire baisser finement la fréquence.

On peut aussi faire baisser la fréquence par enlèvement de matière des éléments élastiques, par exemple au moyen d'un laser ou par fraisage, pour diminuer leur rigidité.

Pour augmenter la fréquence, on peut alléger la masse de l'élément mobile 5 en enlevant de la matière, par exemple aussi au moyen d'un laser ou par fraisage. Comme ces procédés permettent un ajustement très précis, on les utilisera de préférence pour accorder le moteur au quartz.

Comme les résonateurs 6, 7 sont micro-usinés, on peut aussi réaliser, lors de la construction, de petites masselottes à enlever pour augmenter la fréquence jusqu'à une valeur cible.

Le pic de résonance du moteur accouplé à sa charge est dimensionné suffisamment large, soit beaucoup plus que celui du quartz. C'est pourquoi il est possible de varier légèrement la vitesse du moteur en changeant sa fréquence d'excitation, sans perdre beaucoup d'amplitude, par exemple pour rattraper une perte d'état suite à un choc ou tout autre perturbation, afin de réaligner la base de temps quartz avec la position des aiguilles.

Selon l'invention, les deux résonateurs 6, 7 sont disposés par rapport à l'élément mobile 5, de sorte que le couple résultant de toutes les forces d'accélération s'appliquant dans le plan de chaque résonateur 6, 7 soit nul.

On obtient cet avantage, grâce à la configuration du moteur piézoélectrique décrite précédemment.

Par exemple, lors d'une accélération brusque horizontale (selon l'axe X) vers la droite, le résonateur 6, l'élément mobile 5 et la paire de tables de translation 24, 25 subissent des forces d'accélération qui tendent à les pousser vers la gauche.

Les résonateurs 6,7 sont dimensionnés et agencés par rapport à l'élément mobile 5, de telle sorte que le couple résultant de toutes les forces s'appliquant autour du centre de rotation du résonateur 6,7 soit nul dans le plan de chaque résonateur 6, 7.

Ainsi, le résonateur 6,7 peut osciller sans être perturbé par un choc latéral. Cela est toujours vrai pour d'autres directions de choc agissant sur ce même résonateur 6, 7, si le centre de masse du seul résonateur est situé sur une droite passant par le point de pivotement.

La figure 6 montre un résonateur 6, 7, tel que ceux utilisés dans le moteur piézoélectrique des figures 1 à 5. Le résonateur 6 comporte une masse oscillante 20 munie d'un bras principal, une première masselotte 44 à une première extrémité, et une deuxième masselotte 45 à une deuxième extrémité, la deuxième masselotte 45 formant un coude replié sous le bras principal.

L'embase 43 a une forme parallélépipédique décalée vers la première masselotte 44 sensiblement droite, un premier coin étant orienté vers le coude replié de la deuxième masselotte 45. L'embase 43 est agencée entre la première masselotte 44 et le coude replié de la deuxième masselotte 45. L'embase 43 comprend un canal oblique 38 ouvert depuis le premier coin vers l'intérieur de l'embase 43.

Le résonateur comprend un guidage flexible muni d'une première lame flexible 36 reliant la masse oscillante 20 à l'embase 43, depuis l'extrémité du coude replié, la première lame flexible 36 s'étendant dans la canal oblique 38 jusqu'à un point d'attache au fond du canal oblique 38.

Le guidage flexible comprend une deuxième lame flexible 37 s'étendant parallèlement au bras de la masse oscillante 20, depuis un deuxième coin de l'embase 43 jusqu'à un point d'attache à l'intérieur du coude replié de la masse oscillante 20. La deuxième lame flexible 37 est agencée au-dessus de la première lame flexible 36.

La première lame flexible 36 et la deuxième lame flexible 37 forment un « Y », et s'étendent de manière à former un angle non nul compris entre 10° et 80°, de préférence compris entre 30° et 60°, voire compris entre 40° et 50°.

Les deux lames flexibles 36, 37 comportent un matériau piézoélectrique, disposé ici en totalité sur la deuxième lame flexible 37, et en partie sur la première lame flexible 36. L'actionnement des lames flexibles 36, 37 est identique à celui des modes de réalisation précédents, grâce à des contacts électriques non représentés sur les figures.

Les lames flexibles ont par exemple une couche de matériau piézoélectrique prise en sandwich entre deux couches d'électrodes. Les couches d'électrodes sont elles-mêmes agencées au-dessus d'un matériau structurel de support monolithique, par exemple du silicium monocristallin ou polycristallin, tel que du quartz, du verre, du métal, etc...

Pour actionner les lames flexibles 36, 37, l'embase 43 comprend plusieurs contacts électriques 9 reliés aux couches d'électrodes pour recevoir un courant électrique et actionner les couches piézoélectriques des lames flexibles.

Les couches piézoélectriques comportent de préférence un matériau cristallin ou polycristallin, par exemple en céramique solide (pour niobate de Potassium sodium) ou de type PZT (pour titano-zirconates de plomb, les lames flexibles 36, 37 ayant une épaisseur leur permettant de se déformer.

Ainsi, en activant électriquement les couches de matériau piézoélectrique, les lames flexibles 36, 37 se déforment alternativement latéralement en direction du centre et de l'extérieur. L'activation est produite avec une tension alternative. Grâce à l'actionnement des couches piézoélectriques, les lames flexibles 36, 37 se courbent légèrement, puis se redressent alternativement à une fréquence prédéfinie.

En choisissant un actionnement des deux lames flexibles 36, 37 en opposition de phase, la masse oscillante 20 effectue de petites oscillations autour d'un centre de rotation correspondant au point de croisement des deux lames flexibles. Ainsi, la masse oscillante 20 oscille et les deux masselottes 44, 45 se déplacent latéralement à une certaine fréquence.

Les résonateurs 6, 7 comportent, de préférence majoritairement, un matériau mono- cristallin ou poly-cristallin, tels que le silicium, le verre, la céramique, ou un métal.

Les résonateurs 6, 7 sont par exemple obtenus par des procédés photo-lithographiques de micro-usinage de type MEMS (pour micro-electro mechanical systems), Les qualités de rigidité, d'élasticité et la précision d'usinage de tels matériaux confèrent une grande qualité de résonance aux résonateurs 6, 7.

De plus, les caractéristiques d'amagnétisme et de basse conductivité de certains de ces matériaux permettent d'obtenir une excellente résistance aux champs magnétiques continus et alternatifs de valeurs élevées.

En outre, les résonateurs 6, 7 sont configurés pour faire osciller la masse oscillante 20 à la fréquence propre du résonateur 6, 7. Ainsi, on limite la consommation d'énergie du résonateur, notamment en augmentant la course angulaire de la masse oscillante.

D'autres types de résonateurs sont bien sûr possibles, tels des résonateurs de type RCC, double RCC ou des résonateurs à spiral. Des exemples de résonateurs piézoélectrique sont décrits dans les demandes de brevet EP 4 391 347 A1, EP 4 391 348 A1 et EP 4 390 557 A1.

On comprendra que diverses modifications et/ou améliorations et/ou combinaisons évidentes pour l'homme du métier peuvent être apportées aux différentes formes d'exécution de l'invention exposée ci-dessus sans sortir du cadre de l'invention définie par les revendications annexées.

**Revendications**

1. Moteur piézoélectrique (1) rotatif, notamment pour une pièce d'horlogerie, le moteur (1) comprenant :

   - un rotor (3) configuré pour pouvoir tourner et actionner un dispositif mécanique,
   - un stator (2) configuré pour faire tourner le rotor (3), le stator (2) comprenant un actionneur piézoélectrique, l'actionneur piézoélectrique comprenant un élément mobile (5) dont le déplacement fait tourner le rotor (3) dans un premier sens et deux résonateurs actionnables électriquement, les résonateurs étant reliés à l'élément mobile (5) pour le déplacer contre le rotor (3) afin de le faire tourner, les deux résonateurs (6, 7) étant agencés par rapport à l'élément mobile (5) de manière à faire osciller l'élément mobile (5) dans une première et une deuxième direction différentes l'une de l'autre,

   **caractérisé en ce que** chaque résonateur (6, 7) comporte un centre de rotation, les deux résonateurs (6, 7) étant disposés par rapport à l'élément mobile (5), de sorte qu'autour de chaque centre de rotation, le couple résultant de toutes les forces d'accélération s'appliquant dans le plan de chaque résonateur (6, 7) soit nul.

2. Moteur piézoélectrique (1) selon la revendication 1, dans lequel le premier (6) et le deuxième résonateur (7) sont agencés perpendiculairement l'un par rapport à l'autre, de sorte que la première et la deuxième direction soient sensiblement perpendiculaires.

3. Moteur piézoélectrique (1) selon la revendication 1 ou 2, dans lequel le premier (6) et le deuxième résonateur (7) sont chacun agencés sur un côté différent de l'élément mobile (5), les deux côtés étant de préférence adjacents.

4. Moteur piézoélectrique (1) selon l'une, quelconque, des revendications précédentes, comprenant une première table de translation (24) permettant à l'élément mobile (5) de se mouvoir selon la première direction.

5. Moteur piézoélectrique (1) selon la revendication 4, comprenant une deuxième table de translation (25), permettant à l'élément mobile (5) de se mouvoir selon la deuxième direction.

6. Moteur piézoélectrique (1) selon la revendication 5, dans lequel la deuxième table de translation (25) est agencée en série de la première table de translation (24), l'élément mobile (5) étant relié à la deuxième table de translation (25).

7. Moteur piézoélectrique (1) selon la revendication 5 ou 6, dans lequel la première table de translation (24) et la deuxième table de translation (25) sont sensiblement perpendiculaires l'une par rapport à l'autre.

8. Moteur piézoélectrique (1) selon l'une, quelconque, des revendications précédentes, dans lequel une table de translation (24, 25) est agencée de l'autre côté de l'élément mobile (5) par rapport à un résonateur (6, 7).

9. Moteur piézoélectrique (1) selon l'une, quelconque, des revendications précédentes, dans lequel chaque résonateur (6, 7) est muni d'une masse oscillante (20) actionnée par une paire de lames flexibles (36, 37) comportant un matériau piézoélectrique.

10. Moteur piézoélectrique (1) selon l'une, quelconque, des revendications précédentes, dans lequel l'élément mobile (5) effectue un mouvement orbital, de préférence circulaire, dans un deuxième sens inverse du premier sens.

11. Moteur piézoélectrique (1) selon l'une, quelconque, des revendications précédentes, dans lequel l'élément mobile (5) est toujours en contact avec le rotor (3) pendant le fonctionnement du moteur rotatif.

12. Moteur piézoélectrique (1) selon la revendication 10 ou 11, dans lequel le déplacement de l'élément mobile (5) fait tourner le rotor (3) de manière continue.

13. Moteur piézoélectrique (1) selon l'une, quelconque, des revendications précédentes, dans lequel l'élément mobile (5) a une forme d'anneau, le rotor (3) étant agencé à l'intérieur de l'anneau.

14. Moteur piézoélectrique (1) selon la revendication 13, dans lequel le contact entre l'élément mobile (5) et le rotor (3) mobile est à l'intérieur de l'anneau.

15. Moteur piézoélectrique (1) selon la revendication 13 ou 14, dans lequel le rotor (3) comprend une roue dentée (9), l'anneau comportant une denture interne (10) coopérant avec une denture externe (12) de la roue dentée (8).

16. Moteur piézoélectrique (1) selon l'une, quelconque, des revendications précédentes, dans lequel l'élément mobile (5) est immobile en rotation sur lui-même.

17. Moteur piézoélectrique (1) selon l'une, quelconque, des revendications précédentes, dans lequel le premier (6) et le deuxième résonateurs (7) sont actionnés avec un déphasage de 90°.

18. Pièce d'horlogerie comportant un mouvement d'horlogerie comprenant une transmission d'engrenages configurée pour faire tourner au moins une aiguille, **caractérisé en ce qu'**elle comprend un moteur piézoélectrique (1) selon l'une, quelconque, des revendications précédentes, le moteur piézoélectrique (1) étant agencé pour actionner la transmission d'engrenages.

**Patentansprüche**

1. Rotierender piezoelektrischer Motor (1), insbesondere für ein Uhrwerk, wobei der Motor (1) umfasst:

- einen Rotor (3), der so ausgeführt ist, dass er drehbar ist und ein mechanisches Bauteil antreiben kann,
- einen Stator (2), der dazu eingerichtet ist, den Rotor (3) in Drehung zu versetzen, wobei der Stator (2) einen piezoelektrischen Aktor umfasst. Der piezoelektrische Aktor weist ein bewegliches Element (5) auf, dessen Bewegung den Rotor (3) in einer ersten Drehrichtung antreibt, sowie zwei elektrisch ansteuerbare Resonatoren, die mit dem beweglichen Element (5) gekoppelt sind, um dieses gegen den Rotor (3) zu bewegen und dadurch dessen Drehung zu bewirken. Die beiden Resonatoren (6, 7) sind relativ zum beweglichen Element (5) so angeordnet, dass sie dieses bewegliche Element (5) in einer ersten und in einer zweiten, voneinander unterschiedlichen Richtung in Schwingung versetzen,

**dadurch gekennzeichnet, dass** jeder der Resonatoren (6, 7) ein eigenes Rotationszentrum aufweist und die beiden Resonatoren (6, 7) relativ zum beweglichen Element (5) derart angeordnet sind, dass um jedes Rotationszentrum das aus sämtlichen im Ebenenbereich des jeweiligen Resonators (6, 7) wirkenden Beschleunigungskräften resultierende Drehmoment null ist.

2. Piezoelektrischer Motor (1) nach Anspruch 1, bei dem der erste Resonator (6) und der zweite Resonator (7) zueinander im Wesentlichen senkrecht angeordnet sind, sodass die erste und die zweite Richtung im Wesentlichen rechtwinklig zueinander verlaufen.

3. Piezoelektrischer Motor (1) nach Anspruch 1 oder 2, wobei der erste Resonator (6) und der zweite Resonator (7) jeweils auf unterschiedlichen Seiten des beweglichen Elements (5) angeordnet sind, wobei die beiden Seiten vorzugsweise benachbart sind.

4. Piezoelektrischer Motor (1) nach einem der vorstehenden Ansprüche, umfassend eine erste Translationseinheit (24), die es dem beweglichen Element (5) ermöglicht, sich entlang der ersten Richtung zu bewegen.

5. Piezoelektrischer Motor (1) nach Anspruch 4, umfassend eine zweite Translationseinheit (25), die es dem beweglichen Element (5) ermöglicht, sich entlang der zweiten Richtung zu bewegen.

6. Piezoelektrischer Motor (1) nach Anspruch 5, bei dem die zweite Translationseinheit (25) in Serie zur ersten Translationseinheit (24) angeordnet ist, wobei das bewegliche Element (5) mit der zweiten Translationseinheit (25) verbunden ist.

7. Piezoelektrischer Motor (1) nach Anspruch 5 oder 6, bei dem die erste Translationseinheit (24) und die zweite Translationseinheit (25) im Wesentlichen senkrecht zueinander angeordnet sind.

8. Piezoelektrischer Motor (1) nach einem der vorstehenden Ansprüche, bei dem eine Translationseinheit (24, 25) auf der dem jeweiligen Resonator (6, 7) gegenüberliegenden Seite des beweglichen Elements (5) angeordnet ist.

9. Piezoelektrischer Motor (1) nach einem der vorstehenden Ansprüche, bei dem jeder Resonator (6, 7) mit einer Schwingmasse (20) versehen ist, die durch ein Paar flexibler Lamellen (36, 37) mit piezoelektrischem Material angetrieben wird.

10. Piezoelektrischer Motor (1) nach einem der vorstehenden Ansprüche, bei dem das bewegliche Element (5) eine Umlaufbewegung, vorzugsweise eine kreisförmige, in einer zweiten, der ersten entgegengesetzten Richtung ausführt.

11. Piezoelektrischer Motor (1) nach einem der vorstehenden Ansprüche, bei dem das bewegliche Element (5) während des Betriebs des Rotationsmotors ständig mit dem Rotor (3) in Kontakt steht.

12. Piezoelektrischer Motor (1) nach Anspruch 10 oder 11, bei dem die Bewegung des beweglichen Elements (5) den Rotor (3) kontinuierlich antreibt.

13. Piezoelektrischer Motor (1) nach einem der vorstehenden Ansprüche, bei dem das bewegliche Element (5) ringförmig ausgebildet ist und der Rotor (3) innerhalb des Rings angeordnet ist.

14. Piezoelektrischer Motor (1) nach Anspruch 13, bei dem der Kontakt zwischen dem beweglichen Element (5) und dem beweglichen Rotor (3) innerhalb des Rings erfolgt.

15. Piezoelektrischer Motor (1) nach Anspruch 13 oder 14, bei dem der Rotor (3) ein Zahnrad (9) umfasst, wobei der Ring eine Innenverzahnung (10) aufweist, die mit einer Außenverzahnung (12) des Zahnrads (8) zusammenwirkt.

16. Piezoelektrischer Motor (1) nach einem der vorstehenden Ansprüche, bei dem das bewegliche Element (5) keine Eigenrotation um seine eigene Achse ausführt.

17. Piezoelektrischer Motor (1) nach einem der vorstehenden Ansprüche, bei dem der erste (6) und der zweite Resonator (7) mit einer Phasenverschiebung von 90° angesteuert werden.

18. Uhrwerksteil mit einem Uhrwerk, das ein Zahnradgetriebe umfasst, welches zum Antrieb von mindestens einem Zeiger ausgelegt ist, **dadurch gekennzeichnet, dass** es einen piezoelektrischen Motor (1) nach einem der vorstehenden Ansprüche aufweist, wobei der piezoelektrische Motor (1) zum Antrieb des Zahnradgetriebes vorgesehen ist.

**Claims**

1. A rotary piezoelectric motor (1), in particular for a timepiece, the motor (1) comprising:

   - a rotor (3) configured to rotate and actuate a mechanical device,
   - a stator (2) configured to rotate the rotor (3), the stator (2) comprising a piezoelectric actuator,

   the piezoelectric actuator comprising a moving element (5) whose movement causes the rotor (3) to rotate in a first direction and two electrically actuatable resonators, the resonators being connected to the moving element (5) to move it against the rotor (3) to cause it to rotate, the two resonators (6, 7) being arranged relative to the moving element (5) so as to cause the moving element (5) to oscillate in first and second directions different from each other, **characterised in that** each resonator (6, 7) includes a centre of rotation, the two resonators (6, 7) being disposed relative to the moving element (5) so that, around each centre of rotation, the torque resulting from all the acceleration forces being applied in the plane of each resonator (6, 7) is zero.

2. The piezoelectric motor (1) according to claim 1, wherein the first (6) and second (7) resonators are arranged perpendicular to each other, so that the first and second directions are substantially perpendicular.

3. The piezoelectric motor (1) according to claim 1 or 2, wherein the first (6) and second (7) resonators are each arranged on a different side of the moving element (5), the two sides preferably being adjacent.

4. The piezoelectric motor (1) according to any one of the preceding claims, comprising a first translation table (24) enabling the moving element (5) to move in the first direction.

5. The piezoelectric motor (1) according to claim 4, comprising a second translation table (25) enabling the moving element (5) to move in the second direction.

6. The piezoelectric motor (1) according to claim 5, wherein the second translation table (25) is arranged in series with the first translation table (24), the moving element (5) being connected to the second translation table (25).

7. The piezoelectric motor (1) according to claim 5 or 6, wherein the first translation table (24) and the second translation table (25) are substantially perpendicular to each other.

8. The piezoelectric motor (1) according to any one of the preceding claims, wherein a translation table (24, 25) is arranged on the other side of the moving element (5) with respect to a resonator (6, 7).

9. The piezoelectric motor (1) according to any one of the preceding claims, wherein each resonator (6, 7) is provided with an oscillating mass (20) actuated by a pair of flexible blades (36, 37) including a piezoelectric material.

10. The piezoelectric motor (1) according to any one of the preceding claims, wherein the moving element (5) performs an orbital movement, which is preferably circular, in a second direction opposite to the first direction.

11. The piezoelectric motor (1) according to any one of the preceding claims, wherein the moving element (5) is always in contact with the rotor (3) during operation of the rotary motor.

12. The piezoelectric motor (1) according to claim 10 or 11, wherein the movement of the moving element (5) causes the rotor (3) to rotate continuously.

13. The piezoelectric motor (1) according to any one of the preceding claims, wherein the moving element (5) is ring-shaped, the rotor (3) being arranged inside the ring.

14. The piezoelectric motor (1) according to claim 13, wherein the contact between the moving element (5) and the moving rotor (3) is inside the ring.

15. The piezoelectric motor (1) according to claim 13 or 14, wherein the rotor (3) comprises a toothed wheel (9), the ring including an internal toothing (10) cooperating with an external toothing (12) of the toothed wheel (8).

16. The piezoelectric motor (1) according to any one of the preceding claims, wherein the moving element (5) is fixed in rotation on itself.

17. The piezoelectric motor (1) according to any one of the preceding claims, wherein the first (6) and second (7) resonators are actuated with a 90° phase shift.

18. A timepiece including a horological movement comprising a gear transmission configured to rotate at least one hand, **characterised in that** it comprises a piezoelectric motor (1) according to any one of the preceding claims, the piezoelectric motor (1) being arranged to actuate the gear transmission.

## Fig. 1

## Fig. 2

Fig. 3

Fig. 4

## Fig. 5

## Fig. 6

**EP 4 391 349 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 709512
- EP 0587031 A
- EP 4198648 A1
- US 6664710 B1
- JP H03273871 A
- US 5079471 A
- US 4888515 A
- EP 4391347 A1
- EP 4391348 A1
- EP 4390557 A1